# EUROPÄISCHE PATENTSCHRIFT

(11) **EP 1 428 364 B1**
(45) Veröffentlichungstag und Bekanntmachung des Hinweises auf die Patenterteilung: **03.08.2005**
(21) Anmeldenummer: 02776702.9
(22) Anmeldetag: 20.09.2002
(51) Int. Cl.: H04L 25/02

(54) **VERFAHREN UND SCHALTUNGSANORDNUNG ZUR ANPASSUNG DES SPANNUNGSPEGELS FÜR DIE ÜBERTRAGUNG VON DATEN**
METHOD AND CIRCUIT CONFIGURATION FOR ADAPTING THE VOLTAGE LEVEL FOR THE TRANSMISSION OF DATA
PROCEDE ET MONTAGE DESTINES A L'ADAPTATION DU NIVEAU DE TENSION POUR LA TRANSMISSION DE DONNEES

(30) Priorität: 21.09.2001 DE 10146585
(43) Veröffentlichungstag der Anmeldung: 16.06.2004
(73) Patentinhaber: SIEMENS AKTIENGESELLSCHAFT, 80333 München (DE)
(72) Erfinder: BRAND, Uwe, 81829 München (DE); KÖNIG, Wilhelm, 86391 Stadtbergen (DE)
(86) Internationale Anmeldenummer: PCT/DE2002/003585
(87) Internationale Veröffentlichungsnummer: WO 2003/028324

(56) Entgegenhaltungen:
- US-A- 5 939 923
- US-A- 5 973 521
- US-A- 6 069 494
- US-B1- 6 281 715

## Beschreibung

Die Erfindung betrifft ein Verfahren und eine Schaltungsanordnung zum Einstellen des Spannungspegels bei der elektrischen Übertragung von Daten zwischen einem sendenden Baustein und einem empfangenden Baustein einer oder verschiedener Baugruppen.

Effizienz bei der elektrischen Datenübertragung zwischen elektronischen Bauteilen spielt vor allem in den Bereichen eine große Rolle, wo wie in der Übermittlungstechnik Daten mit hoher Frequenz übertragen werden. Die Optimierung der Werte von den auftretenden Spannungen und Strömen ist dabei ein wichtiger Faktor um Verlustleistung zu minimieren.

Für die schnelle elektrische Datenübertragung zwischen Bausteinen auf einer Baugruppe oder über eine Rückwand auf eine andere Baugruppe haben sich bestimmte Schnittstellen-Standards wie beispielsweise Emitter Coupled Logic (ECL), Gunning Transceiver Logic (GTL), Current Mode Logic (CML) und Low Voltage Differential Signalling (LVDS) herausgebildet. Bei diesen Standards sind jeweils die Spannungspegel, bzw. Ausgangsströme, Abschlusswiderstände etc. genormt. Die Ausgangsschaltungen der Sendeeinheit der Bausteine arbeiten dabei häufig als geschaltete Stromquellen. Bei eingeschalteter Stromquelle entsteht ein Spannungsabfall am Abschlußwiderstand des Empfängers, der beispielsweise einer logischen Eins entspricht. Typische Werte für den Spannungsabfall, bzw. für die Spannungsdifferenz zur Definition der zwei Zustände für eine binäre Logik sind einige hundert mV. Aufgrund der Toleranzen der integrierten Stromquellen, die durch Fertigungstoleranzen, Variationen von Versorgungsspannungen und Temperatureinflüsse entstehen und aufgrund von Fertigungstoleranzen, Temperaturkoeffizienten und eventueller Nichtlinearitäten integrierter Abschlusswiderstände weist auch der durch den Spannungsabfall am Abschlußwiderstand erzeugte Spannungspegel erhebliche Toleranzen auf. Typische maximale Schwankungen für integrierte Stromquellen und Abschlusswiderstände liegen für die CMOS-Technologie im Bereich von 20%.

Für eine sichere Datenübertragung muss der Ausgangspegel so gewählt werden, dass am Empfängerbaustein auch im ungünstigsten Fall, d.h. bei Werten von Ausgangsstrom und Abschlusswiderstand, die am unteren Ende des jeweiligen Schwankungsbereichs liegen, noch ein Spannungspegel erzeugt wird, der sich beim Empfängerbaustein eindeutig detektieren lässt. Diese Wahl des Ausgangspegels kann dazu führen, dass ein erheblich höherer Ausgangsstrom als für die Datenübertragung notwendig erzeugt wird, der umso mehr von dem minimal notwendigen Wert für die Spannung differiert, je stärker sich die maximalen Werte für Ausgangsstrom und Abschlusswiderstand von den Werten am unteren Ende der Schwankungsbereiche unterscheiden. Der höhere Ausgangsstrom führt zu einer höheren Verlustleistung und bei gegebener Datenrate zu höherer Flankensteilheit der Signale und folglich zu erhöhten Störungen für benachbarte Kanäle.

Eine Verringerung der Toleranzen ist durch die Herstellung von genauen Referenzwiderständen und/oder -spannungsquellen durch spezielle Prozessschritte bei der Herstellung oder durch Laserabgleich im Anschluss an den Herstellungsprozess möglich. Diese Lösung zur Reduktion von Toleranzen und damit für eine bessere Einstellung des Spannungspegels ist aufwendig und teuer und wird in der Regel deshalb nur in Spezialfällen verwendet.

Um den Ausgangsstrom anzupassen und die Pegelschwankungen zu verringern, werden teilweise externe genaue Referenzelemente verwendet, z.B. Widerstände und/oder Spannungsquellen. Dieses Vorgehen bringt den Nachteil von zusätzlichem Platzbedarf auf der Baugruppe und zusätzlichen Kosten mit sich. Außerdem werden zusätzliche Pins am Baustein benötigt. Integrierte Abschlusswiderstände werden auch oft mit Regelschaltungen auf einen genauen Referenzwiderstand geregelt. Dazu ist aber auch ein externes Element notwendig. Zudem erlauben die obigen Maßnahmen nur eine Reduzierung der Toleranzen und können signifikante Schwankungen von Spannungspegeln und Verlustleistung nicht verhindern.

Aus der Patentschrift US-A-6069494 ist ein mit zwei Halbleiterbausteinen und einem die Bausteine verbindenden Bus gebildetes System bekannt, welches die Übertragung von Amplitudeninformationen über den Bus zwecks Einstellung der Signalamplitude für die Datenübertragung zwischen den Bausteinen vorsieht.

Aufgabe der Erfindung ist es, ein Verfahren und eine Schaltungsanordnung zur Einstellung des Spannungspegels anzugeben, wobei die Nachteile der bekannten Verfahren zur Reduzierung des Schwankungsbereichs vermieden werden.

Die Aufgabe wird durch ein Verfahren und eine Schaltungsanordnung entsprechend der Ansprüche 1 bzw. 16 jeweils durch deren kennzeichnende Teile gelöst.

Bei dem erfindungsgemäßen Verfahren wird der Spannungspegel am Ausgang des sendenden Bausteins schrittweise oder kontinuierlich erhöht. Dabei wird wenigstens ein Signal unter Verwendung des jeweiligen Spannungspegels vom sendenden zum empfangenden Baustein übertragen. Der Spannungspegel für die Darstellung des Signals beim empfangenden Bausteins wird mit einer Referenzgröße oder das Signal mit einem Referenzmuster verglichen und bei Erreichen einer ausreichenden Höhe des Spannungspegels zur korrekten Darstellung des übertragenen Signals an den sendenden Baustein eine Information übermittelt. Schließlich wird auf den Empfang der Information hin das Anhalten der Erhöhung des Spannungspegels am Ausgang des sendenden Bausteins bewirkt (Anspruch 1). Durch das erfindungsgemäße Verfahren wird auf effiziente Weise beim empfangenden Baustein der minimale Spannungspegel für die Übertragung von Daten eingestellt. Dadurch werden die Verlustleistung der Bausteine bzw. des Systems und Störungen auf Nachbarkanäle durch hohe Spannungspegel minimiert. Die Genauigkeit der integrierten Strom- oder Spannungsquellen kann geringer sein und es werden zur Einstellung des Ausgangsstroms keine externen Elemente benötigt.

Bei einer Variante des erfindungsgemäßen Verfahrens wird ein dem empfangenden Baustein bekanntes Bitmuster bzw. eine Bitmusterfolge unter Verwendung des jeweiligen Spannungspegels wenigstens einmal vom sendenden zum empfangenden Baustein übertragen. Das übertragene Bitmuster bzw. die übertragene Bitmusterfolge wird beim empfangenden Baustein mit dem bekannten Bitmuster bzw. der bekannten Bitmusterfolge verglichen und so die korrekte Übertragung überprüft. Bei korrekter Übertragung wird eine Information an den sendenden Baustein geschickt, wodurch das Anhalten der Erhöhung des Spannungspegels bewirkt wird (Anspruch 2). Bei dieser variante erfolgt die Einstellung dynamisch, also bei der vollen zu übertragenden Datenrate. Man kann dadurch auch Dämpfungen des Signals kompensieren, die bei sehr hohen Datenraten im Bereich von Gbit/s von dielektrischen Verlusten des Baugruppenmaterials und dem Skineffekt auf den Leitungen verursacht werden, d.h. die Einstellung nimmt auf die Frequenzabhängigkeit des Signalpegels Rücksicht. Auch Leitungsstörungen auf Grund von Reflexionen und Übersprechen werden hier mitberücksichtigt.

Bei einer Realisierung des erfindungsgemäßen Verfahrens wird der Spannungspegel des übertragenen Signals mittels eines Pegelvergleichers beim empfangenden Baustein mit einem Referenzspannungspegel verglichen, der der erforderlichen Mindesteingangsspannung entspricht. Bei Gleichheit bzw. Überschreiten der Mindesteingangsspannung wird eine Information an den sendenden Baustein geschickt, wodurch das Anhalten der Erhöhung des Spannungspegels bewirkt wird (Anspruch 3). Die Verwendung eines Pegelvergleichers erlaubt auf einfache und effiziente Weise zu überprüfen, ob der Signalpegel für die fehlerfreie Übertragung von Daten ausreicht. Die Information zum Anhalten der Erhöhung des Spannungspegels kann über eine eigene Leitung übertragen werden (Anspruch 4). Eine zusätzliche Leitung zur Übertragung der Information kann in der Regel ohne größeren Zusatzaufwand vorgesehen werden. Eine Lösung ohne zusätzliche Leitung ist, die Information zum Anhalten der Erhöhung des Spannungspegels über die Signalleitung selbst zu übertragen (Anspruch 5).

Es empfiehlt sich, das Verfahren während einer Einstellphase, insbesondere während eine's Neustarts des die Baugruppe bzw. die Baugruppen umfassenden Systems, durchzuführen (Anspruch 6). Das Ausnützen von einer Einstellphase zur Durchführung des Verfahrens vermeidet zusätzliche Unterbrechungen beim Betrieb der Bausteine bzw. des Systems.

Alternativ kann die Information zum Anhalten der Erhöhung des Spannungspegels mit Hilfe eines während der Einstellphase entsprechend geschalteten Multiplexers beim empfangenden Baustein und eines entsprechend geschalteten Demultiplexers beim sendenden Baustein über eine vorhandene Leitung übermittelt werden. Dabei wird eine Leitung benutzt, über die während der Einstellphase des Spannungpegels keine nicht der Pegeleinstellung dienenden Signale übertragen werden (Anspruch 7). Bei dieser Alternative kommt man ohne zusätzliche Leitung aus. Dabei kann die Information mit Hilfe einer zusätzlichen Strom- oder Spannungsquelle bei dem empfangenden Baustein übermittelt werden. Zum Übermitteln der Information mit Hilfe der zusätzlichen Strom- bzw. Spannungsquelle wird der Potentialpegel der verwendeten Leitung so verändert, dass er eine Schwellenspannung über- oder unterschreitet. Das Über- bzw. Unterschreiten der Schwellenspannung wird beim sendenden Baustein detektiert und die Erhöhung des Spannungspegels angehalten (Anspruch 8).

Die Erhöhung des Spannungspegels kann mit Hilfe eines nach Maßgabe eines Taktes arbeitenden Zählers erfolgen, wobei durch den Zähler eine Ausgangsstufe des sendenden Bausteins so angesteuert wird, dass nach Maßgabe des Taktes der Spannungspegel erhöht wird (Anspruch 9). Die Verwendung eines getakteten Zählers erlaubt den Spannungspegel schrittweise zu erhöhen. Bei der Durchführung des Verfahrens während einer Einstellphase und der Benutzung einer eigenen Rückleitung kann das Verfahren auf folgende Weise durchgeführt werden: Der Zähler wird mit Hilfe eines Flankendetektors, der das Initialisierungs-Signal zur Initialisierung der Einstellphase detektiert, zurückgesetzt. Das Einschalten des Zählers erfolgt mit Hilfe eines Aktivierungs-Signals am Initialisierungs-Eingang, wobei dieses Signal so durch logische Verknüpfung des die Einstellungsphase anzeigenden Initialisierungs-Signals mit dem Potentialwert der Leitung zum Übermitteln der Information zum Anhalten des Anstiegs des Spannungspegels erzeugt wird, dass der Zähler während der Einstellphase aktiviert ist, solange der gewünschte Spannungspegel noch nicht erreicht ist. Der Zähler arbeitet nach Maßgabe eines Taktsignals. Bei aufsteigender Zählung wird schrittweise der Spannungspegel durch Aktivierung verschiedener Stufen einer Strom- bzw. Spannungsquelle erhöht. Schließlich wird bei Erreichen des gewünschten Spannungspegels der Potentialwert der Leitung zum Übermitteln der Information zum Anhalten des Anstiegs des Spannungspegels geändert, so dass sich das Signal am Initialisierungs-Eingang ändert, wodurch das Anhalten des Zählers bewirkt wird (Anspruch 10).

Alternativ zu einem Zähler kann der Steuerblock des erfindungsgemäßen Verfahrens effizient mit Hilfe eines Schieberegisters realisiert werden. Dabei wird auf der Sendeseite nach Maßgabe eines Taktes über ein Schieberegister eine Ausgangsstufe so angesteuert, dass nach Maßgabe des Taktes der Spannungspegel erhöht wird (Anspruch 11).

Bei einer Einstellung des Spannungspegels während einer Einstellphase, wobei für die Übertragung der Information eine eigene Rückleitung verwendet wird, kann das Schieberegister mit Hilfe eines Flankendetektors, der das Initialisierungs-Signal zur Initialisierung der Einstellphase detektiert, zurück gesetzt werden. Das Schieberegister arbeitet nach Maßgabe eines Taktes. Dabei
- ist das Taktsignal logisch so mit dem an der Leitung zum Übermitteln der Information zum Anhalten des Anstiegs des Spannungspegels anliegenden Signal und dem die Einstellphase anzeigenden Initialisierungs-Signal verknüpft, dass das Taktsignal während der Einstellphase aktiviert ist, solange der Spannungspegel am Eingang des empfangenden Bausteins unter dem gewünschten Wert liegt,
- aktiviert das Schieberegister nacheinander nach Maßgabe des Taktes die Einzelquellen einer aus einer Anzahl von Einzelquellen gebildeten Stromquelle bzw. Spannungsquelle so, dass der Stromwert bzw. Spannungswert der Strom- bzw. Spannungsquelle und damit der Spannungspegel schrittweise erhöht wird, und
- wird bei Erreichen des gewünschten Spannungspegels ein Signal an die Leitung zum Übermitteln der Information zum Anhalten des Anstiegs des Spannungspegels angelegt, wodurch das Anhalten des Schieberegisters bewirkt wird (Anspruch 12).

Zusätzlich kann die Verlustleistung des Bausteins minimiert werden, indem man die nur während der Einstellphase aktiven Schaltungsteile nach der Einstellphase stromlos schaltet (Anspruch 13).

Für den Fall, dass der Spannungspegel von dem sendenden Baustein zu mehreren empfangenden Bausteinen eingestellt wird kann der Spannungspegel zur Übertragung an dem am weitesten entfernten Baustein eingestellt und der so bestimmte Spannungspegel für die Übertragung an alle empfangenden Bausteine verwendet werden (Anspruch 14). Dabei wird man häufig den am weitesten entfernten empfangenden Baustein für die Einstellung des Sendepegels vorsehen (Anspruch 15), bei dem aufgrund der Länge der Übertragungsstrecke im Regelfall die größte Dämpfung der Signale auftritt. Ein solcher Betriebsfall, wo z.B. von einem Sendebaustein zu mehreren Empfangsbausteinen sehr viele Signale verteilt werden, kommt vielfach in Vermittlungsanlagen in Koppelfeldern oder bei Computern zwischen Prozessoren und Speicherbausteinen vor. Der Zusatzaufwand ist in diesem Fall besonders gering, weil eine einzige Rückleitung von dem vom Sender am weitesten entfernten Baustein genügt.

Bei der erfindungsgemäßen Schaltungsanordnung weist der sendende Baustein eine variable Strom- oder Spannungsquelle auf, mit Hilfe derer unterschiedliche Spannungspegel von an den empfangenden Baustein zu übertragenden Signalen erzeugbar sind. Der empfangende Baustein weist einen Pegelvergleicher auf, durch den eine Referenzspannung mit dem Spannungspegel eines vom sendenden Baustein übertragenen Signals vergleichbar ist. Der Pegelvergleicher weist einen Ausgang auf, der mit einem Gatter des sendenden Bausteins verbunden ist. Das Gatter ist mit einem weiteren Eingang versehen, über den ein logisches Signal anlegbar ist, durch das die Information über Beginn und Ende einer Einstellphase einspeisbar ist. Der Ausgang des Gatters ist mit einem Steuerblock verbunden , durch den die Strom- bzw. Spannungsquelle aufsteuerbar ist (Anspruch 16). Bei der Verwendung eines Differenzsignals können zwei Leitungen für die Übertragung vorgesehen sein (Anspruch 17).

Bei einer Ausgestaltung der erfindungsgemäßen Schaltungsanordnung ist die Strom- bzw. Spannungsquelle mit mehreren Strom- bzw. Spannungserzeugungselementen und der Steuerblock mit einem Zähler gebildet , wobei
- der Ausgang des Gatters mit dem Initialisierungs-Eingang des Zählers verbunden ist,
- ein Flankendetektor vorgesehen ist, an dessen Eingang das Signal zur Initialisierung der Einstellphase anlegbar ist und dessen Ausgang mit dem Rücksetz-Eingang des Zählers verbunden ist,
- der Zähler einen Eingang für ein Taktsignal aufweist,
- der Zähler Ausgänge aufweist, die so mit verschiedenen Stufen der Stromquelle bzw. der Spannungsquelle verbunden sind, dass bei aufsteigender Zählung schrittweise der Stromwert bzw. Spannungswert, der von der Quelle geliefert wird, erhöhbar ist (Anspruch 18). Mit Hilfe eines Zählers und einer mehrstufigen Strom- bzw. Spannungsquelle kann so eine schrittweise Erhöhung des Spannungspegels realisiert werden.

Bei einer anderen Ausgestaltung mit Hilfe eines Schieberegisters ist die Stromquelle bzw. die Spannungsquelle mit einer Anzahl von Einzelquellen und der Steuerblock mit einem Schieberegister gebildet, wobei
- ein zusätzliches Gatter gegeben ist, dessen einer Eingang mit dem Ausgang des anderen Gatters verbunden ist, über dessen anderen Eingang ein Taktsignal einspeisbar ist und dessen Ausgang mit dem Schieberegister verbunden ist,
- ein Flankendetektor vorgesehen ist, an dessen Eingang das Signal zur Initialisierung der Einstellphase anlegbar ist und dessen Ausgang mit dem Rücksetz-Eingang des Schieberegisters verbunden ist,
- das Schieberegister Ausgänge aufweist, die so mit der mit einer Reihe von Einzelquellen gebildeten Stromquelle bzw. Spannungsquelle verbunden sind, dass die Anzahl der Einzelquellen, die zu dem Stromwert bzw. Spannungswert der Strom- bzw. Spannungsquelle beitragen, schrittweise erhöhbar ist (Anspruch 19).

Im folgenden wird der Anmeldungsgegenstand im Rahmen von Ausführungsbeispielen anhand von Figuren näher erläutert. Es zeigen
Fig.1: Schematische Darstellung einer Realisierung des Erfindungsgegenstands für ein Eintaktsignal mit Hilfe einer zusätzlichen Leitung,
Fig.2: Schematische Darstellung einer Realisierung des Erfindungsgegenstands für ein Differenzsignal mit Hilfe einer zusätzlichen Leitung,
Fig.3: Schematische Darstellung einer Realisierung des Erfindungsgegenstands für ein Eintaktsignal ohne zusätzliche Leitung,
Fig.4: Schematische Darstellung einer Realisierung des Erfindungsgegenstands für ein Differenzsignal ohne zusätzliche Leitung,
Fig.5: Eine Realisierung der Steuerung zur erfindungsgemäßen Einstellung des Spannungspegels mit Hilfe eines Zählers,
Fig.6: Eine Realisierung der Steuerung zur erfindungsgemäßen Einstellung des Spannungspegels mit Hilfe eines Schieberegisters, und
Fig.7: Ein Zeitdiagramm für die Signalzustände relevanter Steuerparameter während der Einstellphase.

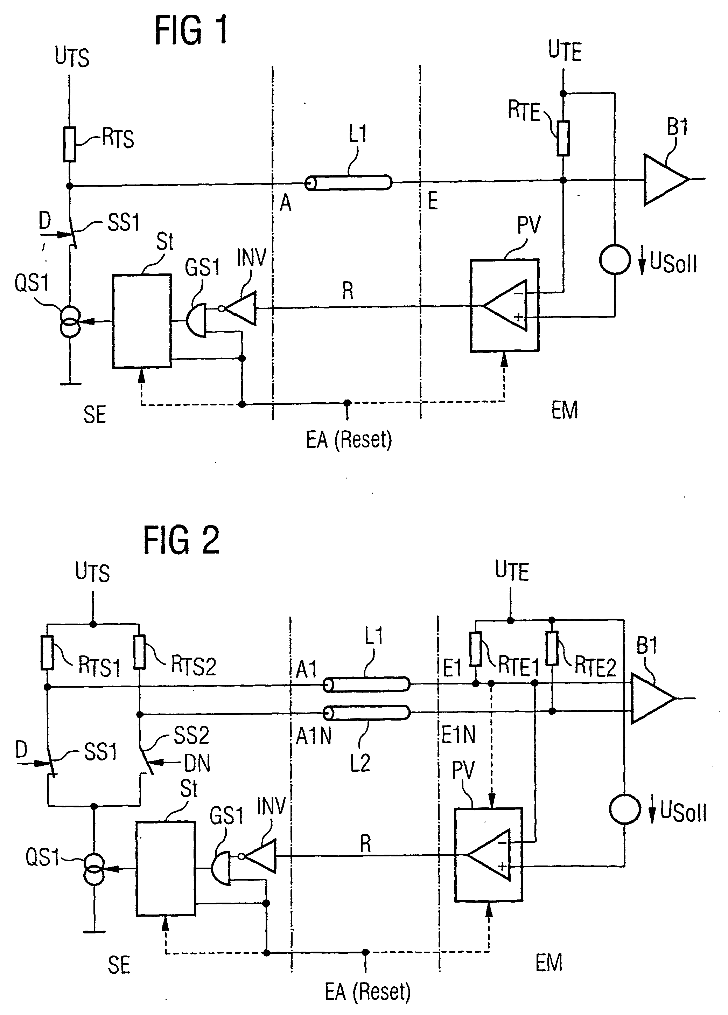

Dabei bezeichnen gleiche Bezugszeichen gleiche Elemente. In Figur 1 und 2 sind schematische Darstellungen von Realisierungen des Erfindungsgegenstands mit Hilfe einer separaten Rückleitung R dargestellt. Vom Empfängerbaustein - im folgenden Empfänger genannt - zum Sendebaustein - im folgenden Sender genannt - führt eine eigene Rückleitung R. Diese Rückleitung R stellt in der Regel keinen nennenswerten Zusatzaufwand dar.

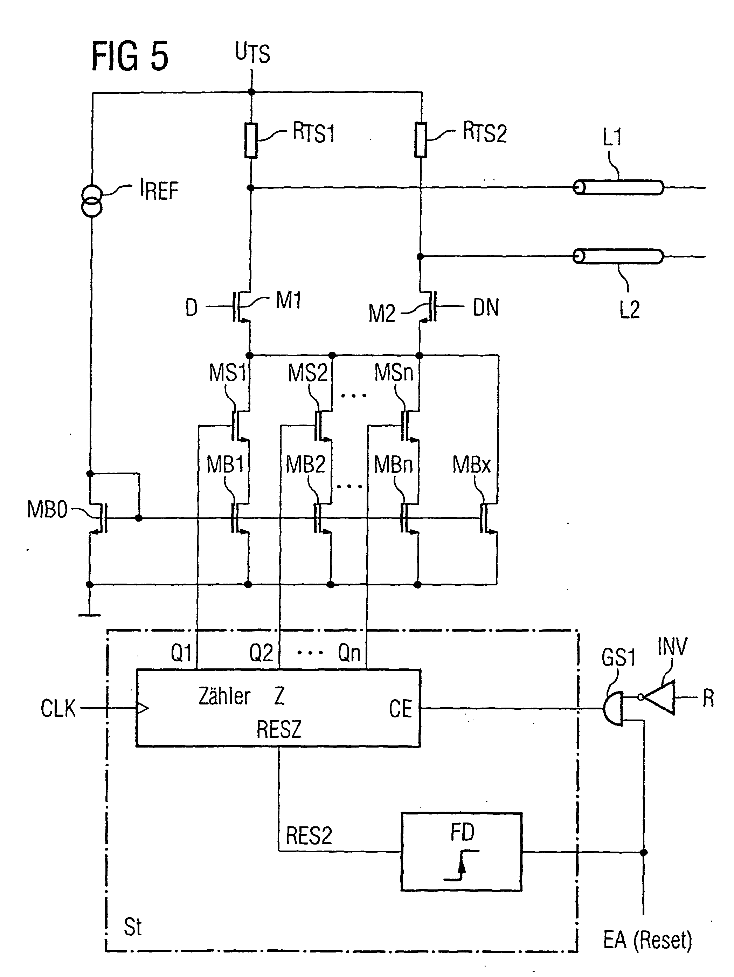

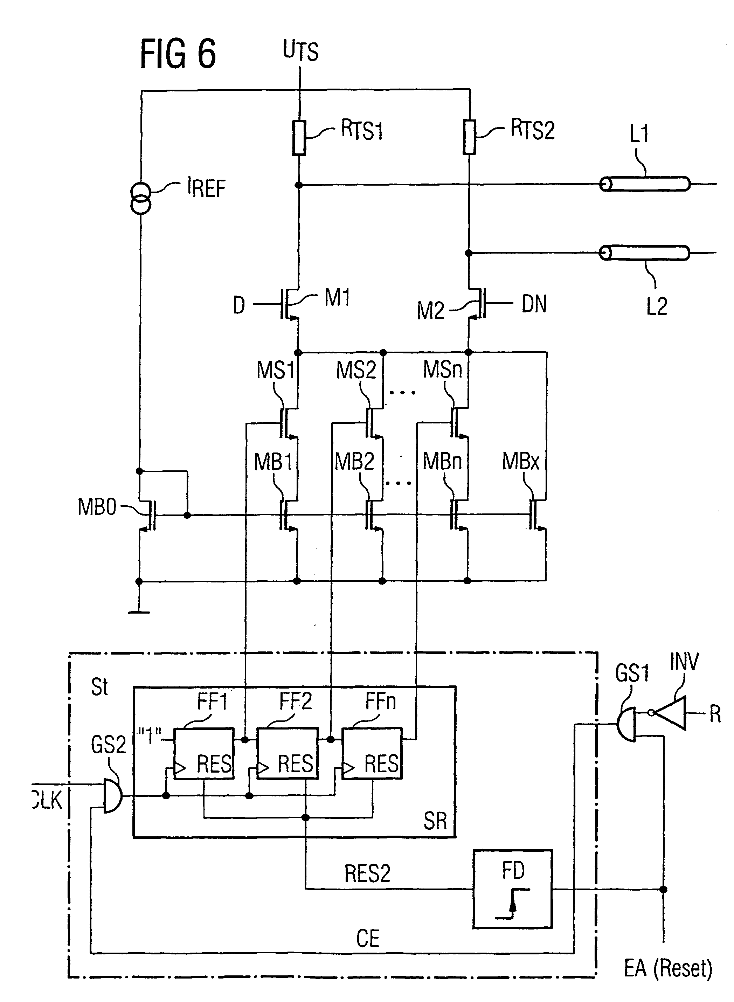

In Figur 1 sind wesentliche Elemente zur Einstellung des Spannungspegels durch Pegelvergleich dargestellt. Am Eingang des Empfängers befindet sich ein Pegelvergleicher PV, der den momentanen Spannungspegel mit einer Referenzspannung Usoll vergleicht, die gleich der erforderlichen Mindesteingangsspannung des Empfängers ist. Die Zugehörigkeit der Schaltungselemente von Sender und Empfänger sind mit gestrichelten Linien und den Bezugszeichen SE und EM kenntlich gemacht. Der logische Wert, der durch das Ausgangssignal des Pegelvergleichers PV repräsentiert wird, wird invertiert, wenn die Referenzspannung Usoll überschritten wird. Das Umschalten wird zum Sender SE zurückgemeldet und bewirkt, dass das Ansteigen des Ausgangsstroms gestoppt wird. Der Sender SE weist eine Sendestufe auf, die eine Stromquelle QS1 umfasst, welche mit einem Schalter SS1 ein- und ausgeschaltet werden kann. Der Widerstand R_{TS} ist ein eventuell vorhandener Abschlußwiderstand am Sender, auf den bei niedrigen Datenraten verzichtet werden kann. L1 ist eine Signalleitung, die den Ausgang A des Senders SE mit dem Eingang E des Empfängers EM verbindet. Für diese Signalleitung L1 ist der Spannungspegel übertragener Signale einzustellen. R_{TE} ist der Abschlußwiderstand des Empfängers EM. Die Terminierungsspannungen für die Widerstände R_{TS} bzw. R_{TE} sind U_{TS} am Sender SE bzw. U_{TE} am Empfänger EM. Um einen dauernden Stromfluss zwischen U_{TS} und U_{TE} und damit einen unnötigen Leistungsverbrauch zu vermeiden, sollten U_{TS} und U_{TE} gleiche Werte aufweisen. B1 ist der Eingangsbuffer, der das Signal zur Weiterverarbeitung im Baustein detektiert. Die Einstellung des Spannungspegels wird durch ein Signal EA (für: Einstellphase aktiv) initiiert, welches an dem Gatter GS1 angelegt wird und eine logische Eins repräsentiert. Das Signal EA kann z.B. das Signal zum Neustart sein, welches vielfach auch mit dem englischen Begriff reset bezeichnet wird. Über die Leitung R liegt an dem Inverter INV das Ausgangssignal des Pegelvergleichers PV an, welches bei Start der Einstellphase eine logische Null repräsentiert. Das Gatter GS1 ist als UND-Gatter ausgestaltet. Bei Beginn der Einstellphase liegt an dem einen Eingang des Gatters GS1 eine logische Eins an, die die Einstellphase anzeigt. An dem anderen Eingang liegt ebenfalls eine logische Eins an, solange der Spannungspegel den Wert Usoll für die korrekte Darstellung von übertragenen Signalen noch nicht erreicht hat. Dabei ist von dem Empfänger EM an der Rückleitung eine logische Null angelegt, die durch einen Invertierer INV invertiert wird, so dass an dem Steuerblock ST eine logische Eins anliegt. Über diesen Steuerblock ST, für den in Figur 5 und 6 Realisierungen angegeben sind, wird die Stromquelle QS1 hochgesteuert. Der Schalter SS1 ist am Anfang der Einstellphase geschlossen. Am Empfänger EM befindet sich an der Signalleitung L1 der eine Eingang eines Pegelvergleichers PV, der hier als Komparator angedeutet ist. Der Pegelvergleicher PV vergleicht den Spannungspegel auf der Eingangsleitung L1 mit einer Referenzspannung Usoll. Die Referenzspannung Usoll entspricht dabei dem Spannungswert, der für die Detektion von Signalen beim Empfänger EM mindestens notwendig ist, d.h. dem einzustellenden Spannungswert. Der Ausgang des Pegelvergleichers PV liefert das Rückmeldesignal R. Das Rückmeldesignal R repräsentiert den logischen Wert Null, solange der Spannungspegel unter der Referenzspannung Usoll liegt und nimmt den logischen Wert Eins an, wenn das Eingangspotential E den Wert U_{TE} - Usoll unterschreitet. Der Spannungspegel ist dann hinreichend groß, um den logischen Wert Null darzustellen. Die Referenzspannung Usoll kann durch Spannungsteilung aus der Spannung U_{TE} erzeugt werden. In vielen Fällen ist eine lokale Referenzspannung z.B. im Rahmen der Biaserzeugung zur Ruhestromkompensation vorhanden, die dafür genutzt werden kann. Die Funktion des Steuerblocks ST ist es, bei Aktivieren der Einstellphase durch das Signal EA den Strom der Stromquelle QS1 und damit den Spannungspegel zu erhöhen, bis die Rückmeldung R vom Empfänger EM kommt, dass der gewünschte Spannungswert erreicht ist. Auf die Rückmeldung R hin wird von dem Steuerblock ST der Stromanstieg unterbrochen und der von der Stromquelle QS1 gelieferte Strom auf dem erreichten Wert fixiert. Damit wird auch der Spannungspegel auf dem erreichten Wert fixiert, mit dem ab dann gesendet wird. Um die Verlustleistung zu verringern, können nur während der Einstellphase aktive Schaltungsteile nach der Einstellphase stromlos geschaltet werden, was in Figur 1 durch gestrichelte Linien angedeutet ist.

In Figur 2 ist eine schematische Darstellung einer Realisierung des Erfindungsgegenstands für ein Differenzsignal mit Hilfe einer zusätzlichen Leitung R dargestellt. Dabei entsprechen die dargestellten Schaltungselemente denen einer CML-Schnittstelle. Das Prinzip der in Figur 2 gezeigten Realisierung ist aber nicht auf CML-Schnittstellen beschränkt, sondern es kann auch andere Schnittstellen-Standards angewendet werden, z.B. LVDS-Schnittstellen. LVDS-Schnittstellen arbeiten zum Teil mit Stromquellen, die an den Abschlusswiderständen Strom in beide Richtungen einspeisen können. Aufgrund der differentiellen Arbeitsweise besteht die Sendestufe aus einer Stromquelle QS1 mit zwei Schaltern SS1 und SS2, die je nach Polarität der Sendeinformationen den einen oder anderen Ausgang mit QS1 verbinden. Entsprechend sind zwei Abschlusswiderstände RTS1 und RTS2 am Sender SE, zwei Signalleitungen L1 und L2 und zwei Abschlusswiderstände RTE1 und RTE2 am Empfänger EM vorhanden. Während der Einstellphase sendet der Sender SE ein konstantes Signal so, dass das Potential des Ausgangs A1 einer logischen Null und das Potential des Ausgangs A1N einer logische Eins entsprechen, was auch durch die Schalterstellungen von SS1 und SS2 in Figur 2 ausgedrückt ist. Durch den Pegelvergleicher PV wird der Spannungspegel am Eingang E1, der sich auf logisch Null befindet, mit dem Sollwert Usoll verglichen. Die weiteren in Figur 2 gezeigten Elemente bzw. Funktionen entsprechen denen der von Figur 1. Der Pegelvergleicher PV kann auch in einer aufwändigeren Realisierung die Differenzspannung der beiden Signalleitungen L1 und L2 auswerten und mit dem Sollwert vergleichen, was durch eine gestrichelte Linie zwischen der Leitung L2 bzw. dem Eingang E1N und dem Pegelvergleicher PV angedeutet ist.

Zur Rückmeldung wird eine vorhandene Leitung verwendet, z.B. eine Steuerleitung, die während der Einstellphase keine relevante Information überträgt. An dieser Leitung befinden sich am Empfänger EM ein Multiplexer und am Sender SE ein Demultiplexer - in der Figur nicht dargestellt -,
Der Multiplexer und der Demultiplexer werden mit Hilfe des Initialisierung-Signals (EA) zum Start der Einstellphase so umgeschaltet, dass während der Einstellphase der Empfänger seine Rückmeldeinformationen auf diese Leitung gibt und der Sender am entsprechenden Demultiplexerausgang diese Information auswertet. Alternativ zur Verwendung einer vorhandenen Leitung kann auch die Rückmeldeinformation über die Signalleitung selber oder eine eigene Leitung übertragen werden.

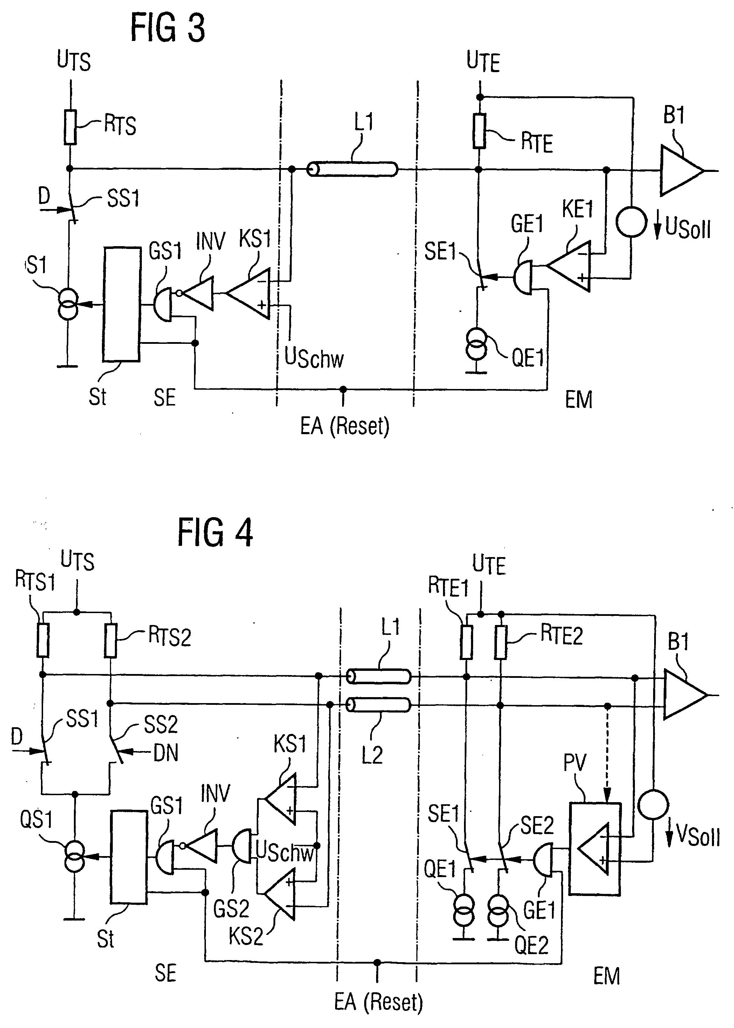

In Figur 3 ist eine schematische Darstellung einer Realisierung des Erfindungsgegenstands für ein Eintaktsignal ohne zusätzliche Leitung gezeigt. Zur Rückmeldung wird die vorhandene Leitung L1 selbst- in der Folge Signalleitung genannt - benutzt. Bei der Übertragung eines differentiellen Signals werden beide Leitungen L1 und L2 genutzt (Figur 4). In den in den Figuren 3 und 4 vorgestellten Realisierungen sind dazu am Empfänger EM eine bzw. zwei eigene Stromquellen QE1 bzw. QE1 und QE2 vorhanden, die im Meldefall einen Zusatzstrom in der Art einspeisen, dass sich an den Abschlusswiderständen sowohl empfangs- als auch sendeseitig ein Potentialpegel einstellt, der außerhalb des normalen Bereichs liegt, beispielsweise bei der in der Figur 3 dargestellten CML-Schnittstelle unterhalb eines Schwellenwerts für das Potential. Dieser Potentialpegel wird detektiert und die Rückmeldung an den Steuerblock St des Senders SE weitergegeben. In Figur 3 ist im Vergleich zu Figur 1 am Empfänger EM zusätzlich der Schalter SE1 und die Stromquelle QE1 vorgesehen. Sobald der Komparator KE1 seinen Ausgang aktiviert, wird der durch die Stromquelle QE1 erzeugte Zusatzstrom auf die Signalleitung L1 eingespeist. Der Sender SE ist zusätzliche mit dem Komparator KS1 versehen, der den Spannungspegel auf der Signalleitung L1 mit einer Schwellenspannung Uschw vergleicht, wobei die Schwellenspannung Uschw unterhalb dem für den normalen Betrieb vorgesehenen Spannungsbereich liegt. Bei differentieller Übertragung sind am Empfänger EM zwei zusätzliche Stromquellen QE1 und QE2 mit identischen Strömen vorgesehen, die im Meldefall den Gleichtaktpegel des Signals ändern. Der Steuerblock St reagiert während der Einstellphase entsprechend auf eine Änderung des Gleichtaktpegels (Figur 4). QE1 und QE2 sind die zusätzlichen Stromquellen, die mit den Schaltern SE1 und SE2 geschaltet sind. Auf der Senderseite befinden sich zwei Komparatoren KS1 und KS2. Das UND-Gatter GS2 verknüpft die Komparatorausgänge so, dass der Stromanstieg gestoppt wird, wenn die Spannungspegel auf beiden Signalleitungen L1 und L2 den Schwellenwert Uschw unterschreiten.

Zu Figur 3 ist noch anzumerken, daß beim Start des Einstellvorganges in der Schleife aus den Elementen SE1, GE1 und KE1 eine Blockierung auftreten könnte, wenn der Schalter SE1 geschlossen wäre. In diesem Falle muß dafür gesorgt werden, daß SE1 zu Beginn des Einstellvorgangs geöffnet wird und solange geöffnet bleibt, bis der Sender seinen Ausgang auf den Minimalwert gesetzt hat. Während des Einstellvorgangs wird SE1 dann geschlossen und muß nach Beendigung des Einstellvorgangs, d.h. wenn EA auf logisch 0 geht, dann wieder geöffnet werden.

Zur Einstellung des Spannungspegels für hochfrequenten Datenaustausch kann anstelle des Vergleiches mit einer Referenzspannung ein bekanntes Referenzmuster übertragen und bei dem Empfänger auf korrekte Übertragung hin überprüft werden. Bei dieser Variante des Erfindungsgegenstands sendet man während der Einstellphase mehrfach hintereinander ein festes, dem Empfänger bekanntes Bitmuster. Dieser analysiert laufend die ankommenden Daten. Ist der Spannungspegel zur Übertragung von Daten bzw. der Sendepegel noch zu gering, so werden bei den empfangenen Daten Bitfehler auftreten. Ist das Bitmuster fehlerfrei erkannt, so ist der Sendepegel ausreichend und die Einstellphase kann wie oben beschrieben beendet werden. Es ist dabei zwar ein gewisser Zusatzaufwand beim Sender zur Erzeugung des Bitmusters und beim Empfänger zur Analyse notwendig. In vielen Fällen sind solche Funktionen aber bereits in den Bausteinen vorgesehen. Beispielsweise benutzt man für Synchronisierungszwecke Rahmenkennworte oder für Testzwecke Pseudozufalls-Bitmuster PRBS (pseudo random bit sequence). Die entsprechenden Schaltungsteile können vorteilhaft mitbenutzt werden. Wenn die Einstellung während der Resetphase des Bausteins durchgeführt wird, dürfen diese Schaltungsteile währenddessen nicht rückgesetzt werden und es ist sicherzustellen, dass sie aus einem beliebigen Zustand richtig loslaufen.

In Figur 5 ist eine Realisierung der Steuerung zur erfindungsgemäßen Einstellung des Spannungspegels mit Hilfe eines Zählers Z dargestellt. Die Schalttransistoren sind mit M1 und M2 bezeichnet und entsprechen den Schaltern von Bild 1 bzw. 2. In der Realisierung wurden Metalloxidfeldeffekttransistoren, die üblicherweise mit MOSFET abgekürzt werden, vorgesehen. Auch Bipolar- oder Galliumarsenidtransistoren können verwendet werden. Am Eingang der Schalttransistoren M1 und M2 liegt das Datensignal D bzw. das dazu inverse Datensignal DN. Die Stromquelle besteht aus den Transistoren MB0, MB1, ..., MBn. Jede der einzelnen Transistoren zur Stromerzeugung MB1, ..., MBn hat in seinem Drainanschluss jeweils einen Serientransistor MS1, .., MSn, mit dem der jeweilige Strom zu- bzw. abgeschaltet werden kann. Unabhängig davon kann noch ein weiterer Transistor MBx vorhanden sein, der einen nicht abschaltbaren Grundstrom bzw. Mindeststrom einspeist. Es ist ein Zähler Z gegeben, dessen Zählausgänge Q1, Q2...Qn mit den Gates der einzelnen Schalttransistoren MS1, ...,MSn verbunden sind. Der momentane Zählerstand bestimmt, welche von den Schalttransistoren MS1, ...,MSn gesperrt und welche leitend sind, und damit den Ausgangsstrom. Dem Zähler Z wird ein Takt CLK (für: clock) zugeführt, der während der Einstellphase - z.B. der Resetphase - aktiv sein muss, also z.B. der Takt, mit dem auch das Resetsignal, das an den meisten Bausteinen asynchron anliegt, eingetaktet wird. Die Einstellphase wird durch das Signal EA (für: Einstellphase aktiv) aktiviert, das an einem Flankendetektor FD und dem Gate GS1 anliegt. Der Flankendetektor FD reagiert auf die positive Flanke des Signals EA und gibt ein Signal RES2 an den Rücksetzeingang RESZ des Zählers Z, wodurch der Zähler Z auf den Anfangszustand zurückgesetzt wird. Bei dem Eingang CE (für: count enable) des Zählers Z wird durch das Signal EA über das Gate GS1 das Zählen freigegeben. Bei dem Zähler Z handelt es sich um einen Aufwärtszähler, d.h. der Zählerstand steigt an. Die Stromquellen sind so dimensioniert, dass mit steigendem Zählerstand der Ausgangsstrom zunimmt. Sobald die Rückmeldung erfolgt, dass der Spannungspegel am Empfängereingang genügend hoch ist, wird der Stromanstieg angehalten. Das Unterbrechen des Stromanstiegs geschieht über die Rückleitung R durch Anlegen eines Signals an GS1, so dass die Aktivierung des Zählvorgangs am Zählereingang CE unterbrochen und der Zählerstand auf dem erreichten Wert stehen bleibt.

Der Zähler Z kann als 1-aus-n-Zähler ausgeführt sein. Dann muss die Dimensionierung der Stromquelle so sein, dass mit jedem Weitergeben des Zählersignals an die nächste Stufe eine neue Stromquelle eingeschaltet wird, die einen höheren Strom einspeist als die vorhergehende. Dies erfolgt üblicherweise über die Dimensionierung der Transistorweite. Der Zähltakt muss langsam genug sein, dass die Stromquellen den Änderungen folgen können. Falls der Bausteintakt zu schnell ist, kann durch einen Frequenzteiler ein langsamerer Takt daraus abgeleitet werden.

Figur 6 zeigt eine Realisierung der Steuerung zur erfindungsgemäßen Einstellung des Spannungspegels mit Hilfe eines Schieberegisters, das aus den D-Flipflops (Data Latch Flipflops) FF1 ...FFn besteht. Die Takteingänge der Flipflops FF1 ...FFn erhalten einen langsamen Takt CLK. Am D-Eingang des ersten Flipflops FF1 liegt permanent eine logische Eins an.
Zu Beginn der Einstellphase werden die Flipflops FF1 ...FFn mit der positiven Flanke vom Signal EA über den Flankendetektor FD zurückgesetzt, d.h. die Pötentialwerte der Ausgänge Q1...Qn repräsentieren logisch Nullen. Die einzelnen Stromquellen sind damit abgeschaltet; es ist dann nur noch ein über den Transistor MBx eingespeister Grundstrom vorhanden. Damit ist der Spannungspegel beim Empfänger EM zu Beginn der Einstellungsphase zu niedrig und die Rückmeldeleitung demzufolge auf einen Potentialwert gesetzt, der eine logische Null repräsentiert. Da das Signal EA während der Einstellungsphase eine logische Eins repräsentiert, wird über das Gatter GS2 der Takt CLK für die Flipflops freigegeben. Der Flankendetektor FD setzt die Rücksetzeingänge der Flipflops wieder auf Null und die logische Eins wird durch das Schieberegister so weitergeschoben, dass mit jedem Taktpuls jeweils ein weiterer Flipflopausgang logisch Eins und eine zusätzliche Stromquelle aktiv wird und damit der Gesamtausgangsstrom erhöht wird.

Zweckmäßigerweise dimensioniert man in diesem Fall die Stromquellen alle gleich, so dass der Ausgangsstrom sich dann gleichmäßig erhöht. Wenn die Rückleitung R aktiviert wird, sperrt GS2 den Takt CLK des Schieberegisters und der momentane Zustand wird fixiert.

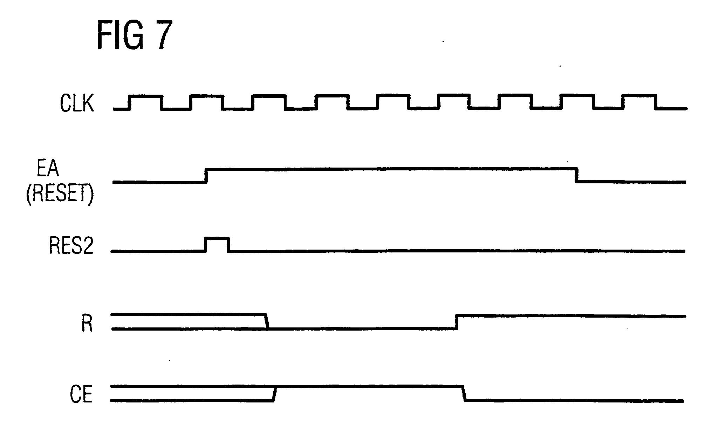

In Figur 7 ist ein Zeitdiagramm für die Signalzustände relevanter Steuerparameter während der Einstellphase für Realisierungen der erfindungsgemäßen Steuerung entsprechend der Figuren 5 oder 6 angegeben. Dabei bezeichnet CLK die Taktfrequenz. Das Signal EA aktiviert die Einstellungsphase. Es kann sich dabei z.B. um das Reset-Signal handeln. Durch das Signal EA wird mittels eines Flankendetektors FD das Signal RES2 erzeugt, durch das der Zähler bzw. das Schieberegister auf ihre Ausgangsstellung gesetzt werden. Mit einer gewissen Verzögerung wird bei dem Empfänger der zu niedrige Spannungspegel detektiert und das Rückmeldesignal R auf Null gesetzt. Durch setzen des Signals R wird über das Signal CE der Zähler bzw. das Schieberegister aktiviert. Das Rückmeldesignal R und das Signal CE zur Aktivierung des Steuerblocks St können sich bevor sie gesetzt werden, in den logischen Zuständen Null oder Eins befinden, was in Figur 7 durch zwei Linien kenntlich gemacht ist. Bei Erreichen des gewünschten Spannungspegels wird das Rückmeldesignal R auf 1 gesetzt, wodurch der Zähler bzw. das Schieberegister durch das Signal CE deaktiviert werden.

## Patentansprüche

1. Verfahren zum Einstellen des Spannungspegels bei der elektrischen Übertragung von Daten zwischen einem sendenden Baustein (SE) und einem empfangenden Baustein (EM) einer oder verschiedener Baugruppen
bei dem,
- der Spannungspegel am Ausgang des sendenden Bausteins (SE) schrittweise oder kontinuierlich erhöht wird,
- wenigstens ein Signal unter Verwendung des jeweiligen Spannungspegels vom sendenden (SE) zum empfangenden Baustein (EM) übertragen wird,
- der Spannungspegel für die Darstellung des Signals beim empfangenden Bausteins (EM) mit einer Referenzgröße (Usoll) oder das Signal mit einem Referenzmuster verglichen wird,
- bei Erreichen einer ausreichenden Höhe des Spannungspegels zur korrekten Darstellung des übertragenen Signals an den sendenden Baustein (SE) eine Information übermittelt wird, und
- auf den Empfang der Information hin das Anhalten der Erhöhung des Spannungspegels am Ausgang des sendenden Bausteins (SE) bewirkt wird.

2. Verfahren nach Anspruch 1,
**dadurch gekennzeichnet,**
- **dass** ein dem empfangenden Baustein (EM) bekanntes Bitmuster oder eine Bitmusterfolge unter Verwendung des jeweiligen Spannungspegels wenigstens einmal vom sendenden (SE) zum empfangenden Baustein (EM) übertragen wird,
- **dass** das übertragene Bitmuster oder die übertragene Bitmusterfolge beim empfangenden Baustein (EM) mit dem bekannten Bitmuster oder der bekannten Bitmusterfolge verglichen und so die korrekte Übertragung überprüft wird, und
- **dass** bei korrekter Übertragung eine Information an den sendenden Baustein (SE) geschickt wird, wodurch das Anhalten der Erhöhung des Spannungspegels bewirkt wird.

3. Verfahren nach Anspruch 1,
**dadurch gekennzeichnet,**
- **dass** der Spannungspegel des übertragenen Signals mittels eines Pegelvergleichers (PV) beim empfangenden Baustein (EM) mit einem Referenzspannungspegel (Usoll) verglichen wird, der der erforderlichen Mindesteingangsspannung entspricht, und
- **dass** bei Gleichheit oder Überschreiten der Mindesteingangsspannung eine Information an den sendenden Baustein (SE) geschickt wird, wodurch das Anhalten der Erhöhung des Spannungspegels bewirkt wird.

4. Verfahren nach einem der vorhergehenden Ansprüche,
**dadurch gekennzeichnet,**
- **dass** die Information zum Anhalten der Erhöhung des Spannungspegels über eine eigene Leitung (R) übertragen wird.

5. Verfahren nach einem der vorhergehenden Ansprüche,
**dadurch gekennzeichnet,**
- **dass** die Information zum Anhalten der Erhöhung des Spannungspegels über eine zur Übertragung des Signals vom sendenden (SE) zum empfangenden Baustein verwendete Signalleitung übertragen wird.

6. Verfahren nach einem der vorhergehenden Ansprüche,
**dadurch gekennzeichnet,**
- **dass** das Verfahren während einer Einstellphase, insbesondere während eines Neustarts des die Baugruppe oder die Baugruppen umfassenden Systems, durchgeführt wird.

7. Verfahren nach Anspruch 6,
**dadurch gekennzeichnet,**
- **dass** die Information zum Anhalten der Erhöhung des Spannungspegels mit Hilfe eines während der Einstellphase entsprechend geschalteten Multiplexer beim empfangenden Baustein und eines entsprechend geschalteten Demultiplexers beim sendenden Baustein über eine vorhandene Leitung übermittelt wird, über die während der Einstellphase des Spannungpegels keine oder ausschließlich der Pegeleinstellung dienenden Signale übertragen werden.

8. Verfahren nach Anspruch 7,
**dadurch gekennzeichnet,**
- **dass** die Information mit Hilfe einer zusätzlichen Strom- oder Spannungsquelle (QE1, QE2) bei dem empfangenden Baustein übermittelt wird,
- **dass** zum Übermitteln der Information mit Hilfe der zusätzlichen Strom- oder Spannungsquelle (QE1, QE2) der Potentialpegel der verwendeten Leitung so verändert wird, dass er eine Schwellenspannung (Uschw) über- oder unterschreitet, und
- **dass** das Über- oder Unterschreiten der Schwellenspannung (Uschw) beim sendenden Baustein (SE) detektiert und die Erhöhung des Spannungspegels angehalten wird.

9. Verfahren nach einem der vorhergehenden Ansprüche,
**dadurch gekennzeichnet,**
**dass** der Spannungspegel mit Hilfe eines nach Maßgabe eines Taktes arbeitenden Zählers (Z) erhöht wird, wobei durch den Zähler (Z) eine Ausgangsstufe des sendenden Bausteins so angesteuert wird, dass nach Maßgabe des Taktes der Spannungspegel erhöht wird.

10. Verfahren nach den Ansprüchen 5, 6 und 9
**dadurch gekennzeichnet,**
- **dass** der Zähler (Z) mit Hilfe eines Flankendetektors (FD), der ein Initialisierungs-Signal (EA) zur Initialisierung der Einstellphase detektiert, zurückgesetzt wird,
- **dass** der Zähler (Z) mit Hilfe eines Aktivierungs-Signals (CE) am Initialisierungs-Eingang eingeschaltet wird, wobei dieses Signal so durch logische Verknüpfung des die Einstellungsphase anzeigenden Initialisierungs-Signals (EA) und dem Potentialwert der Leitung (R) zum Übermitteln der Information zum Anhalten des Anstiegs des Spannungspegels erzeugt wird, dass der Zähler (Z) während der Einstellphase aktiviert ist, solange der gewünschte Spannungspegel noch nicht erreicht ist,
- **dass** der Zähler (Z) nach Maßgabe eines Taktsignals arbeitet,
- **dass** bei aufsteigender Zählung schrittweise der Spannungspegel durch Aktivierung verschiedener Stufen einer Strom- oder Spannungsquelle erhöht wird, und
- **dass** bei Erreichen des gewünschten Spannungspegels der Potentialwert der Leitung (R) zum Übermitteln der Information zum Anhalten des Anstiegs des Spannungspegels geändert wird, so dass sich das Signal (CE) am Initialisierungs-Eingang ändert, wodurch das Anhalten des Zählers bewirkt wird.

11. Verfahren nach einem der Ansprüche 2 bis 8,
**dadurch gekennzeichnet,**
- **dass** auf der Sendeseite nach Maßgabe eines Taktes ein Schieberegister eine Ausgangsstufe so ansteuert, dass nach Maßgabe des Taktes der Spannungspegel erhöht wird.

12. Verfahren nach den Ansprüchen 5,6 und 11,
**dadurch gekennzeichnet,**
- **dass** das Schieberegister mit Hilfe eines Flankendetektors (FD), der das Initialisierungs-Signal (EA) zur Initialisierung der Einstellphase detektiert, zurückgesetzt wird,
- **dass** das Schieberegister nach Maßgabe eines Taktsignals arbeitet, wobei
-- das Taktsignal logisch so mit dem an der Leitung (R) zum Übermitteln der Information zum Anhalten des Anstiegs des Spannungspegels anliegenden Signal und dem die Einstellphase anzeigenden Initialisierungs-Signal (EA) verknüpft ist, dass das Taktsignal während der Einstellphase aktiviert ist, solange der Spannungspegel am Eingang des empfangenden Bausteins unter dem gewünschten Wert liegt,
-- das Schieberegister nach Maßgabe des Taktes die Einzelquellen einer mit einer Reihe von Einzelquellen gebildeten Stromquelle oder Spannungsquelle so nacheinander aktiviert, dass der Stromwert oder Spannungswert der Strom- oder Spannungsquelle und damit der Spannungspegel schrittweise erhöht wird, und
-- bei Erreichen des gewünschten Spannungspegels ein Signal an die Leitung zum Übermitteln der Information zum Anhalten des Anstiegs des Spannungspegels angelegt wird, wodurch das Anhalten des Schieberegisters bewirkt wird.

13. Verfahren nach einem der vorhergehenden Ansprüche,
**dadurch gekennzeichnet,**
**dass** nur während einer Einstellphase aktive Schaltungsteile nach der Einstellphase stromlos geschaltet werden.

14. Verfahren nach einem der vorhergehenden Ansprüche,
**dadurch gekennzeichnet,**
- **dass** der Spannungspegel von dem sendenden Baustein zu mehreren empfangenden Bausteinen eingestellt wird, wobei
-- der Spannungspegel zur Übertragung an einen der empfangenden Bausteine eingestellt wird und
-- der so bestimmte Spannungspegel für die Übertragung an alle empfangenden Bausteine verwendet wird.

15. Verfahren nach Anspruch 14,
**dadurch gekennzeichnet,**
- **dass** der Spannungspegel zur Übertragung an dem am weitesten entfernten Baustein eingestellt wird.

16. Schaltungsanordnung zum Einstellen des Spannungspegels bei der elektrischen Übertragung von Daten zwischen einem sendenden Baustein (SE) und einem empfangenden Baustein (EM) einer oder verschiedener Baugruppen
bei dem,
- der sendende Baustein (SE) eine variable Strom- oder Spannungsquelle zur Erzeugung unterschiedlicher Spannungspegel von an den empfangenden Baustein (EM) zu übertragenden Signalen aufweist,
- der empfangende Baustein (EM) einen Pegelvergleicher (PV) zum Vergleichen einer Referenzspannung (Usoll) mit dem Spannungspegel eines vom sendenden Baustein (SE) übertragenen Signals aufweist,
- der Pegelvergleicher (PV) einen Ausgang aufweist, der mit einem Gatter (GS1) des sendenden Bausteins (SE) verbunden ist,
- das Gatter (GS1) mit einem weiteren Eingang zum Anlegen eines logischen Signals versehen ist, welches der Einspeisung der Information über Beginn und Ende einer Einstellphase dient, und
- der Ausgang des Gatters (GS1) mit einem Steuerblock (St) zur Aufsteuerung der Strom- oder Spannungsquelle verbunden ist.

17. Schaltungsanordnung nach Anspruch 16,
**dadurch gekennzeichnet,**
- **dass** das vom sendenden Baustein (SE) übertragene Signal ein Differenzsignal ist, und
- **dass** zwei Leitungen (L1, L2) zur Übertragung des Differenzsignals vorgesehen sind.

18. Schaltungsanordnung nach Anspruch 17,
**dadurch gekennzeichnet,**
- **dass** die Strom- oder Spannungsquelle mit mehreren Strom- oder Spannungserzeugungselementen gebildet ist,
- **dass** der Steuerblock (St) mit einem Zähler (Z) gebildet ist, wobei
-- der Ausgang des Gatters (GS1) mit dem Initialisierungs-Eingang (CE) des Zählers (Z) verbunden ist,
-- ein Flankendetektor (FD) zur eingangsseitigen Anlegung eines Signals (EA) zur Initialisierung der Einstellphase vorgesehen ist, dessen Ausgang mit einem Rücksetz-Eingang des Zählers (Z) verbunden ist,
-- der Zähler (Z) einen Eingang für ein Taktsignal aufweist,
-- der Zähler Ausgänge (Q1 ... Qn) aufweist, die für eine bei aufsteigender Zählung schrittweise Erhöhung des Stromwerts oder des Spannungswerts, der von der Quelle geliefert wird, mit verschiedenen Stufen der Stromquelle oder der Spannungsquelle verbunden sind.

19. Schaltungsanordnung nach Anspruch 17,
**dadurch gekennzeichnet,**
- **dass** die Stromquelle oder die Spannungsquelle mit einer Reihe von Einzelquellen gebildet ist,
- **dass** der Steuerblock (St) mit einem Schieberegister gebildet ist, wobei
-- ein zusätzliches Gatter (GS2) zur Einspeisung eines Taktsignals über dessen einen Eingang, dessen anderer Eingang mit dem Ausgang des anderen Gatters (GS1) verbunden ist und dessen Ausgang mit dem Schieberegister verbunden ist,
-- ein Flankendetektor (FD) zum Anlegen eines Signals (EA) zur Initialisierung der Einstellphase vorgesehen ist, dessen Ausgang mit einem Rücksetz-Eingang des Schieberegisters verbunden ist,
-- das Schieberegister Ausgänge (Q1 ... Qn) aufweist, die für eine schrittweise Erhöhung der Anzahl der Einzelquellen, die zu dem Stromwert oder Spannungswert der Strom- oder Spannungsquelle beitragen mit der mit einer Reihe von Einzelquellen gebildeten Stromquelle oder Spannungsquelle verbunden sind.

## Claims

1. A method for setting the voltage level for the electrical transmission of data between a sending component (SE) and a receiving component (EM) of one or different modules,
**characterized in that**
- the voltage level is increased incrementally or continuously at the output of the sending component (SE),
- at least one signal is transmitted from the sending (SE) to the receiving component (EM) using the respective voltage level,
- the voltage level for representing the signal at the receiving component (EM) is compared with a reference quantity (Usoll) or the signal is compared with a reference pattern,
- when a sufficiently high voltage level for correctly representing the transmitted signal is reached a notification is transmitted to the sending component (SE), and
- upon reception of the notification the increase in the voltage level at the output of the sending component (SE) is stopped.

2. The method according to Claim 1,
**characterized in that**
a bit pattern or bit pattern sequence known to the receiving component (EM) is transmitted at least once from the sending (SE) to the receiving component (EM) using the respective voltage level,
the transmitted bit pattern or transmitted bit pattern sequence is compared at the receiving component (EM) with the known bit pattern or known bit pattern sequence and in this way the correct transmission is checked, and
- if the data is transmitted correctly, a notification is sent to the sending component (SE) causing the increase in the voltage level to be stopped.

3. The method according to Claim 1,
**characterized in that**
- the voltage level of the transmitted signal is compared by means of a level comparator (PV) at the receiving component (EM) with a reference voltage level (Usoll) which corresponds to the required minimum input voltage, and
- if the voltage level is equal to or exceeds the minimum input voltage, a notification is sent to the sending component (SE) causing the increase in the voltage level to be stopped.

4. The method according to one of the preceding Claims,
**characterized in that**
- the notification for stopping the increase in the voltage level is transmitted via a separate line (R).

5. The method according to one of the preceding Claims,
**characterized in that**
- the notification for stopping the increase in the voltage level is transmitted via the signal line itself.

6. The method according to one of the preceding Claims,
**characterized in that**
- the method is performed during an adjustment phase, in particular during a restart of the system comprising the module or modules.

7. The method according to Claim 6,
**characterized in that**
- the notification for stopping the increase in the voltage level is transmitted by means of a multiplexer switched according during the adjustment phase at the receiving component and a correspondingly switched demultiplexer at the sending component via an existing line via which no signals not serving for level setting are transmitted during the adjustment phase of the voltage level.

8. The method according to Claim 7,
**characterized in that**
- the notification is transmitted by means of an additional current or voltage source (QE1, QE2) at the receiving component,
- in order to transmit the notification by means of the additional current or voltage source (QE1, QE2) the potential level of the line used is modified such that it exceeds or falls below a threshold voltage (Uschw), and
- the exceeding or falling below the threshold voltage (Uschw) is detected at the sending component (SE) and the increase in the voltage level is stopped.

9. The method according to one of the preceding Claims,
**characterized in that**
the voltage level is increased by means of a counter (Z) operating according to a clock, whereby an output stage of the sending component is activated by the counter (Z) such that the voltage level is increased according to the clock.

10. The method according to Claims 5, 6 and 9
**characterized in that**
- the counter (Z) is reset by means of an edge detector (FD) which detects the initialization signal (EA) for initializing the adjustment phase,
- the counter (Z) is switched on by means of an activation signal (CE) at the initialization input, whereby this signal is generated by logical ANDing of the initialization signal (EA) indicating the adjustment phase and the potential value of the line (R) for transmitting the notification for stopping the increase in the voltage level such that the counter (Z) is activated during the adjustment phase as long as the desired voltage level has not yet been reached,
- the counter (Z) operates according to a clock signal,
- as the count increases the voltage level is increased incrementally by activation of different stages of a current or voltage source, and
- when the desired voltage level is reached the potential value of the line (R) for transmitting the notification to stop the increase in the voltage level is modified such that the signal (CE) at the initialization input changes, thereby causing the counter to be stopped.

11. The method according to one of Claims 2 to 8,
**characterized in that**
- on the send side a shift register activates an output stage according to clock such that the voltage level is increased according to the clock.

12. The method according to Claims 5, 6 and 11,
**characterized in that**
- the shift register is reset by means of an edge detector (FD) which detects the initialization signal (EA) used to initialize the adjustment phase,
- the shift register operates according to a clock signal, whereby
-- the clock signal is logically linked to the signal present at the line (R) for transmitting the notification to stop the increase in the voltage level and the initialization signal (EA) indicating the adjustment phase in such a way that the clock signal is activated during the adjustment phase as long as the voltage level at the input of the receiving component is below the desired value,
-- the shift register activates the individual sources of a current source or voltage source formed by a series of individual sources in succession according to the clock such that the current value or voltage value of the current or voltage source, and therefore the voltage level, is increased incrementally, and
-- when the desired voltage level is reached a signal is applied to the line for transmitting the notification to stop the increase in the voltage level, thereby causing the shift register to be stopped.

13. The method according to one of the preceding Claims,
**characterized in that**
- circuit components which are active only during the adjustment phase are de-energized after adjustment phase.

14. The method according to one of the preceding Claims,
**characterized in that**
- the voltage level from the sending component to a plurality of receiving components is set, whereby
-- the voltage level is set for transmission to one of the receiving components and
-- the voltage level determined in this way is used for transmission to all the receiving components.

15. The method according to Claim 14,
**characterized in that**
- the voltage level is set for transmission to the most distant component.

16. A circuit arrangement for setting the voltage level for the electrical transmission of data between a sending component (SE) and a receiving component (EM) of one or different modules,
**characterized in that**
- the sending component (SE) has a variable current or voltage source by means of which different voltage levels of signals to be transmitted to the receiving component (EM) can be generated,
- the receiving component (EM) has a level comparator (PV) by means of which a reference voltage (Usoll) can be compared with the voltage level of a signal transmitted by the sending component (SE),
- the level comparator (PV) has an output which is connected to a gate (GS1) of the sending component (SE),
- the gate (GS1) is provided with a further input via which a logical signal can be applied by means of which the information about the start and end of an adjustment phase can be supplied, and
- the output of the gate (GS1) is connected to a control block (St) by means of which the current or voltage source can be increased.

17. The circuit arrangement according to Claim 16,
**characterized in that**
- two lines (L1, L2) are provided for the transmission of a differential signal.

18. The circuit arrangement according to Claim 17,
**characterized in that**
- the current or voltage source is formed by means of a plurality of current or voltage generation elements,
- that the control block (St) is formed by means of a counter (Z), whereby
-- the output of the gate (GS1) is connected to the initialization input (CE) of the counter (Z),
-- an edge detector (FD) is provided, at whose input the signal (EA) for initializing the adjustment phase can be applied and whose output is connected to the reset input of the counter (Z),
-- the counter (Z) has an input for a clock signal,
-- the counter has outputs (Q1 ... Qn) which are connected to different stages of the current source or voltage source in such a way that as the counter increases the current or voltage value supplied by the source can be increased.

19. The circuit arrangement according to Claim 17,
**characterized in that**
- the current source or voltage source is formed by means of a series of individual sources,
- the control block (St) is formed by means of a shift register, whereby
-- an additional gate (GS2) is provided, one input of which is connected to the output of the other gate (GS1) via whose other input a clock signal can be fed in and whose output is connected to the shift register,
-- an edge detector (FD) is provided, at whose input the signal (EA) for initializing the adjustment phase can be applied and whose output is connected to the reset input of the shift register,
-- the shift register has outputs (Q1 ... Qn) which are connected to the current source or voltage source formed by means of a series of individual sources in such a way that the number of individual sources which contribute to the current value or voltage value of the current or voltage source can be increased incrementally.

## Revendications

1. Procédé pour le réglage du niveau de tension lors de la transmission électrique de données entre un composant émetteur (SE) et un composant récepteur (EM) d'un ou de différents ensembles,
dans lequel
- le niveau de tension à la sortie du composant émetteur (SE) est élevé graduellement ou en continu,
- au moins un signal est transmis du composant émetteur (SE) vers le composant récepteur (EM), moyennant l'utilisation du niveau de tension respectif,
- le niveau de tension pour la représentation du signal, au niveau du composant récepteur (EM), est comparé avec une grandeur de référence (Usoll) ou le signal, avec un modèle de référence,
- à l'obtention d'une hauteur suffisante du niveau de tension pour la représentation correcte du signal transmis, une information est transmise au composant émetteur (SE) et
- suite à la réception de l'information, l'arrêt de l'augmentation du niveau de tension est provoqué, à la sortie du composant émetteur (SE).

2. Procédé selon la revendication 1,
**caractérisé en ce que**
- une séquence binaire ou une suite de séquences binaires connues du composant récepteur (EM) est transmise au moins une fois du composant émetteur (SE) vers le composant récepteur (EM), moyennant l'utilisation du niveau de tension respectif,
- la séquence binaire transmise ou la suite de séquences binaires transmise est comparée, au niveau du composant récepteur (EM), avec la séquence binaire connue ou la suite de séquences binaires connue et la transmission correcte est ainsi contrôlée et
- dans le cas d'une transmission correcte, une information est envoyée au composant émetteur (SE), ce qui provoque l'arrêt de l'augmentation du niveau de tension.

3. Procédé selon la revendication 1,
**caractérisé en ce que**
- le niveau de tension du signal transmis est comparé, au moyen d'un comparateur de niveau (PV), au niveau du composant récepteur (EM), à un niveau de tension de référence (Usoll) qui correspond à la tension d'entrée minimale requise et
- en cas d'identité ou de dépassement de la tension d'entrée minimale, une information est envoyée au composant émetteur (SE), ce qui provoque l'arrêt de l'augmentation du niveau de tension.

4. Procédé selon l'une des revendications précédentes,
**caractérisé en ce que**
- l'information pour arrêter l'augmentation du niveau de tension est transmise par l'intermédiaire d'une propre ligne (R).

5. Procédé selon l'une des revendications précédentes,
**caractérisé en ce que**
- l'information pour l'arrêt de l'augmentation du niveau de tension est transmise par l'intermédiaire d'une ligne de signaux utilisée pour la transmission du signal du composant émetteur (SE) vers le composant récepteur.

6. Procédé selon l'une des revendications précédentes,
**caractérisé en ce que**
- le procédé est exécuté pendant une phase de réglage, en particulier pendant un redémarrage du système comprenant l'ensemble ou les ensembles.

7. Procédé selon la revendication 6,
**caractérisé en ce que**
- l'information pour arrêter l'augmentation du niveau de tension est transmise, à l'aide d'un multiplexeur commuté en conséquence pendant la phase de réglage, au niveau du composant récepteur, et d'un démultiplexeur commuté en conséquence, au niveau du composant émetteur, via une ligne existante par l'intermédiaire de laquelle, pendant la phase de réglage du niveau de tension, aucun signal, ou des signaux servant exclusivement au réglage de niveau, n'est transmis.

8. Procédé selon la revendication 7,
**caractérisé en ce que**
- l'information est transmise à l'aide d'une source de courant ou de tension (QE1, QE2) supplémentaire au niveau du composant récepteur,
- pour transmettre l'information à l'aide de la source de courant ou de tension (QE1, QE2) supplémentaire, le niveau de potentiel de la ligne utilisée est modifié de manière telle qu'il dépasse une tension seuil (Uschw) par le haut ou par le bas et
- le dépassement de la tension seuil (Uschw) par le haut ou par le bas est détecté au niveau du composant émetteur (SE) et l'augmentation du niveau de tension est arrêtée.

9. Procédé selon l'une des revendications précédentes,
**caractérisé en ce que**
- le niveau de tension est augmenté à l'aide d'un compteur (Z) opérant suivant une synchronisation, un étage de sortie du composant émetteur étant commandé par le compteur (Z) de manière telle que le niveau de tension est augmenté suivant la synchronisation.

10. Procédé selon les revendications 5, 6 et 9,
**caractérisé en ce que**
- le compteur (Z) est réinitialisé à l'aide d'un détecteur de flancs (FD) qui détecte un signal d'initialisation (EA) pour initialiser la phase de réglage,
- le compteur (Z) est mis en marche à l'aide d'un signal d'activation (CE) au niveau de l'entrée d'initialisation, ce signal étant produit de manière telle, par association logique du signal d'initialisation (EA) indiquant la phase de réglage et de la valeur de potentiel de la ligne (R) pour la transmission de l'information pour arrêter l'augmentation du niveau de tension, que le compteur (Z) est activé, pendant la phase de réglage, aussi longtemps que le niveau de tension souhaité n'est pas encore atteint,
- le compteur (Z) opère suivant un signal de synchronisation,
- dans le cas du comptage vers le haut, le niveau de tension est augmenté graduellement par activation de différents étages d'une source de courant ou de tension et,
- lors de l'atteinte du niveau de tension souhaité, la valeur de potentiel de la ligne (R) pour la transmission de l'information pour arrêter l'augmentation du niveau de tension subit une modification de sorte que le signal (CE) se modifie, à l'entrée d'initialisation, ce qui provoque l'arrêt du compteur.

11. Procédé selon l'une des revendications 2 à 8,
**caractérisé en ce**
- **que**, côté émission, un étage de sortie est commandé suivant une synchronisation, par l'intermédiaire d'un registre de décalage, de manière telle que le niveau de tension est augmenté suivant la synchronisation.

12. Procédé selon les revendications 5, 6 et 11,
**caractérisé en ce que**
- le registre de décalage est réinitialisé à l'aide d'un détecteur de flancs (FD) qui détecte le signal d'initialisation (EA) pour initialiser la phase de réglage,
- le registre de décalage opère suivant un signal de synchronisation,
-- le signal de synchronisation étant associé logiquement au signal appliqué à la ligne (R) pour transmettre l'information pour arrêter l'augmentation du niveau de tension et au signal d'initialisation (EA) indiquant la phase de réglage de manière telle que le signal de synchronisation est activé pendant la phase de réglage aussi longtemps que le niveau de tension à l'entrée du composant récepteur est en dessous de la valeur souhaitée,
-- le registre de décalage activant successivement, suivant la synchronisation, les sources individuelles d'une source de courant ou d'une source de tension comprenant une série de sources individuelles de manière telle que la valeur du courant ou la valeur de la tension de la source de courant ou de tension et donc le niveau de tension sont augmentés graduellement et
-- un signal étant, lors de l'atteinte du niveau de tension souhaité, appliqué à la ligne pour transmettre l'information pour arrêter l'augmentation du niveau de tension, ce qui provoque l'arrêt du registre de décalage.

13. Procédé selon l'une des revendications précédentes,
**caractérisé en ce que**, après la phase de réglage, des parties de circuit actives uniquement pendant une phase de réglage sont mises hors courant .

14. Procédé selon l'une des revendications précédentes,
**caractérisé en ce que**
- le niveau de tension du composant émetteur vers plusieurs composants récepteurs est réglé,
-- le niveau de tension étant réglé pour la transmission à l'un des composants récepteurs et
-- le niveau de tension ainsi déterminé étant utilisé pour la transmission à tous les composants récepteurs.

15. Procédé selon la revendication 14,
**caractérisé en ce que**
- le niveau de tension est réglé pour la transmission au composant le plus éloigné.

16. Montage pour le réglage du niveau de tension lors de la transmission électrique de données entre un composant émetteur (SE) et un composant récepteur (EM) d'un ou de différents ensembles,
dans lequel
- le composant émetteur (SE) comporte une source de courant ou de tension variable pour la production de niveaux de tension différents de signaux à transmettre au composant récepteur (EM),
- le composant récepteur (EM) comporte un comparateur de niveau (PV) pour comparer une tension de référence (Usoll) avec le niveau de tension d'un signal transmis par le composant émetteur (SE),
- le comparateur de niveau (PV) comporte une sortie qui est reliée à une porte (GS1) du composant émetteur (SE),
- la porte (GS1) est pourvue d'une autre entrée pour l'application d'un signal logique servant à injecter l'information sur le début et la fin d'une phase de réglage et
- la sortie de la porte (GS1) est reliée à un bloc de commande (ST) pour augmenter le réglage de la source de courant ou de tension.

17. Montage selon la revendication 16,
**caractérisé en ce que**
- le signal transmis par le composant émetteur (SE) est un signal différentiel et
- deux lignes (L1, L2) sont prévues pour la transmission du signal différentiel.

18. Montage selon la revendication 17,
**caractérisé en ce que**
- la source de courant ou de tension comprend plusieurs éléments de production de courant ou de tension,
- le bloc de commande (ST) comprend un compteur (Z),
-- la sortie de la porte (GS1) étant reliée à l'entrée d'initialisation (CE) du compteur (Z),
-- un détecteur de flancs (FD) étant prévu pour l'application, côté entrée, d'un signal (EA) pour initialiser la phase de réglage, dont la sortie est reliée à une entrée de réinitialisation du compteur (Z),
-- le compteur (Z) comportant une entrée pour un signal de synchronisation,
-- le compteur comportant des sorties (Q1, ..., Qn) qui sont reliées à différents étages de la source de courant ou de la source de tension pour une augmentation graduelle, dans le cas d'un comptage vers le haut, de la valeur du courant ou de la valeur de la tension fournie par la source.

19. Montage selon la revendication 17,
**caractérisé en ce que**
- la source de courant ou la source de tension comprend une série de sources individuelles,
- le bloc de commande (ST) comprend un registre de décalage, dans lequel
-- une porte supplémentaire (GS2) pour l'injection d'un signal de synchronisation par l'intermédiaire de l'une de ses entrées, dont l'autre entrée est reliée à la sortie de l'autre porte (GS1) et dont la sortie est reliée au registre de décalage,
-- un détecteur de flancs (FD) étant prévu pour l'application d'un signal (EA) pour initialiser la phase de réglage, dont la sortie est reliée à une entrée de réinitialisation du registre de décalage,
-- le registre de décalage comportant des sorties (Q1 ... Qn) qui sont reliées à la source de courant ou à la source de tension comprenant une série de sources individuelles, pour une augmentation graduelle du nombre des sources individuelles qui contribuent à la valeur du courant ou à la valeur de la tension de la source de courant ou de tension.
